# EUROPEAN PATENT SPECIFICATION

(11) **EP 4 321 956 B1**
(45) Date of publication and mention of the grant of the patent: **25.02.2026**
(21) Application number: 22189990.9
(22) Date of filing: 11.08.2022
(51) Int. Cl.: G05D 1/242, G05D 1/667, B66F 9/06, B66F 9/075, G05D 105/28, G05D 107/70, G05D 109/10, G05D 111/10

(54) **AUTONOMOUS CONTROL OF DOCKING AND UNDOCKING OF AN AUTOMATED GUIDED VEHICLE WITH FORKLIFT CAPABILITIES**
AUTONOME STEUERUNG DES ANDOCKENS UND ABKOPPELNS EINES AUTOMATISIERTEN GEFÜHRTEN FAHRZEUGS MIT GABELSTAPLERFÄHIGKEITEN
CONTRÔLE AUTONOME DE L'AMARRAGE ET DU DÉSAMARRAGE D'UN VÉHICULE À GUIDAGE AUTOMATIQUE AYANT DES CAPACITÉS DE CHARIOT ÉLÉVATEUR À FOURCHE

(43) Date of publication of application: 14.02.2024
(73) Proprietor: Mobile Industrial Robots A/S, 5260 Odense S (DK)
(72) Inventor: NIELSEN, Frederik Tøt, 5260 Odense S (DK); AHLER, Christian T., 5260 Odense S (DK); JØRGENSEN, Troels Bo, 5220 Odense SØ (DK)
(74) Representative: Patentgruppen A/S

(56) References cited:
- US-A1- 2018 089 616
- LOURO LUIS ET AL: "A safe autonomous stacker in human shared workspaces *", IECON 2020 THE 46TH ANNUAL CONFERENCE OF THE IEEE INDUSTRIAL ELECTRONICS SOCIETY, IEEE, 18 October 2020 (2020-10-18), pages 4389 - 4396, XP033860433, DOI: 10.1109/IECON43393.2020.9255018
- BEHRJE ULRICH ET AL: "An Autonomous Forklift with 3D Time-of-Flight Camera-Based Localization and Navigation", 2018 15TH INTERNATIONAL CONFERENCE ON CONTROL, AUTOMATION, ROBOTICS AND VISION (ICARCV), IEEE, 18 November 2018 (2018-11-18), pages 1739 - 1746, XP033480649, DOI: 10.1109/ICARCV.2018.8581085

## Description

### Field of the invention

The invention relates to a method of controlling an automated guided vehicle comprising a fork and an automated guided vehicle comprising at least one tine.

### Background of the invention

In the art it is known from EP3729345 to control a vehicle to engage with and disengage from a pallet. The positioning of the vehicle prior to penetrating the pallet with the tine is made based on a baseline geometric representation of a face of the pallet. This baseline geometry representation is established by sensor data as well as automated guided vehicle localization data. It may be determined that the updated geometric representation deviates from the baseline geometric representation by more than a threshold value and, in response, motion of the vehicle may be adjusted.

The control method disclosed in EP3729345 is sensible to errors in the localization data and the suggested control method would not recognize a situation where the pallet is pushed against a wall or other infrastructure/objects, and/or situation where a drive wheel of the automated guided vehicle is slipping.

The document titled "A safe autonomous stacker in human shared workspaces" by Louro Luis et al disclose how to safely operate a retrofitted stacker in a human shared workspace. Several problems with such operation is mention including generation of precise motion that allow the stacker to pick and drop pallets in specific locations and orientations. This prior art document aims to endow conventional human-driven stackers with the capacity to operate autonomously. The solution presented disclose that the stacker is navigated from point A to point B via a sequence of waypoints and when arriving at the destination a slow speed precise manoeuvre is performed such as a Go to Pick. The safety scanner is turned off as the stacker moves backwards towards the pallet. Further, it is described that if an obstacle is not removed from the route of the stacker, its operation is cancelled.

The document titled "An autonomous forklift with 3D Time-of-Flight Camera-Based localization and Navigation" by Ulrich Behrje et al disclose how to operate an autonomous forklift with 3D time of flight (ToF) camera-based localization and navigation and disclose various problems with other sensor systems such as 3D ToF cameras. After arrival at the destination, the AGV is accurately positioned in front of the pallet based on odometry measurement and "local pose of pallet". The positioning and posing of the pallet are made by the 3d ToF camera. After alignment, the forklift moves towards the pallet in a bezier curve i.e. starting with a high curvature and merges into a straight line. The document states that the proposed system only has a 75% hit rate of the pallet detection for identifying the local pose of the pallet.

### Summary of the invention

The inventors have identified the above-mentioned problems and challenges related to control of an automated guided vehicle and solved these problems by the present invention as described below.

In an aspect, the invention relates to a method of controlling an automated guided vehicle on a path between a start position and an object handle position via an alignment position and a docking start position, said automated guided vehicle comprising a turning center, at least one tine, at least one drive wheel, at least two caster wheels, a controller, a primary sensor and a secondary sensor,
wherein said control includes navigating said automated guided vehicle in a predefined corridor along a first part of said path, towards said alignment position,
wherein said control further includes navigating said automated guided vehicle, along a second part of said path, towards said docking start position, based on a first predetermined navigation step comprising turning said automated guided vehicle around said turning center so that said at least one tine points towards said object handle position,
   wherein said second part of said path start at said alignment position, and wherein said alignment position is autonomously determined by said automated guided vehicle when said turning center is aligned with an object target position center line,
wherein said control includes navigating said automated guided vehicle according to a further predetermined navigation step at least partly based on input from said primary sensor along a third part of said path, from said docking start position towards said object handle position a distance determined by said object dimension information, and
wherein said control includes stopping movement of said automated guided vehicle when said automated guided vehicle is aligned with said object handle position.

This method of controlling an automated guided vehicle is advantageous in that the curve (the second part of the path) to be made by the automated guided vehicle can be made precise in the first try, i.e. without the automated guided vehicle need to move away and towards the target position (to pick-up or drop-off a load) several times. This leads to a faster pick-up and drop-off compared to known methods and more important it reduces the footprint on the warehouse floor in that the width of a corridor between two rows of loads can be reduced.

The method is especially advantageous on a fully automated part of a warehouse floor where no manual handling of loads is required. This is because then the width of the corridor between two adjacent rows of loads can be reduced to, in the ideal scenario, the diagonal length of the automated guided vehicle (from one corner of the robot to the end of the opposite side tine (if the automated guided vehicle comprises two tines)). This may contribute to increasing the number of rows on the warehouse floor.

The automated guided vehicle (sometimes simply referred to as autonomous mobile robot, mobile robot or simply robot) controlled according to the present invention may be of different types. It may be equipped with one or more drive wheels which may be located in or close to the center of the robot or may be located towards the sides of the housing of the robot. Further, the robot may comprise one tine if e,g, hollow pipes are objects to be transported, but more often, the robot comprise two tines thereby enabling the robot to transport pallets.

Moving a load from one place to another should be understood as the primary task for the automated guided vehicle. The fork of the automated guided vehicle is suitable for lifting pallets carrying an object or a load directly. Together a pallet and an object may be referred to as a load, but in this document a reference to a load or object is the same unless otherwise mentioned. The load is having a target position where the automated guided vehicle is picking up or dropping off the pallet / object / load.

A corridor should be understood as a passage between two adjacent rows of racks, loads, markers, etc. Alternatively, one or both sides of a corridor may be defined virtually such as by coordinates on a digital map. Accordingly, typically a corridor is predetermined, but could also be defined as rows of loads made by the automated guided vehicle. In the latter situation, the corridor may also be referred to as predetermined in that even when no loads are positioned, the target positions of the loads are defined and thus the location of the corridor.

A predetermined navigation step should be understood as a step of control of movement of the automated guided vehicle which is made independent of its surroundings. Hence, input from e.g. a scanning Lidar sensor may not be needed to control movement during such step. Thus, one such step could be continue driving in current direction for 0.5m. Another such step could be performing a 90 degree turn to the left, etc. It should, however, be noted that a scanning Lidar sensor could be used for safety i.e. to avoid collision during a predetermined navigation step.

The start position could in theory be any position of the automated guided vehicle prior to it arriving at the alignment position. With this said, in this document, the start position would typically be a position at the corridor e.g. where the automated guided vehicle start to move parallel to a corridor side.

The alignment position should be understood as a position on the path between the start and object handle positions. Until the alignment position i.e. along the first part of the path, the automated guided vehicle may be controlled according to a so-called normal mode of operation. When reaching the alignment position, the control of the movement of the automated guided vehicle according to the normal mode of operation is stopped. Accordingly, the second part of the path could be said to start at the alignment position and thus from the alignment position, the movement of the automated guided vehicle may be controlled according to the predetermine navigation steps.

The docking start position should be understood as a position where the tines of the automated guide vehicle is facing the object (to be picked up) or the target position of the object (where it is to be dropped off).

The object handle position should be understood as the location or coordinates at which a the automate guided vehicle should be located to picked up or dropped off an object.

**In** an exemplary embodiment of the invention, the alignment position is determined by said controller based on predetermined information of a turning center of said automated guided vehicle, predetermined object dimension information and predetermined object target position information.

The turning center should be understood as a fixed position around which the automated guided vehicle is able to turn e.g. 90 degrees.

The object dimension information should be understood as e.g. width, length, height, weight of an object, where on the object pallet pockets are located, dimensions of pallet pockets, etc.

The object target position information should be understood as information defining the location of a target position of the load / object i.e. where on the warehouse floor to pick-up or positioning a load / an object. The object target position information may specify which row and where (its target position is) in that row of objects an object is to be picked up or dropped off. This information may thus include warehouse number, row number, the number in the row i.e. the first, second, third, etc. target position in a row, first available target position, etc.

Both the turning center, the information of object dimensions and target position information is preferably known by the controller before the automated guided vehicle reaches the alignment position. This information may be accessible by the controller e.g. from a data storage of the automated guided vehicle. Thus, from this predetermined information, the controller can navigate the automated guide vehicle to the correct row and if the object target position is the first in the row, also determine the alignment position based on this information.

In an exemplary embodiment of the invention, the alignment position is furthermore determined by said controller based on a comparison of predetermined adjacent object dimension information of an object located at an adjacent object target position and input from said primary sensor scanning surroundings of said automated guided vehicle.

Adjacent object dimension information should be understood as information of dimensions of an object positioned next to the predetermined target position of the object which is to be picked up or dropped off (i.e. at an adjacent object target position). Such information may include height, length, width of the object, if the object is standing on a pallet, etc.

Scanning surroundings should in particular be understood as scanning object(s) already present in a row so as to be able to match scanning data with predetermined adjacent object dimension information.

Accordingly, comparing the scanning information with the predetermined adjacent object dimension information is advantageous in that the automated guided vehicle autonomously can locate a target position for an object to be picked up or dropped off. By knowledge of turning center and object dimension information, the automated guided vehicle is furthermore able to determine the alignment position from where the predetermined navigation step is used to ensure correct docking of the automated guided vehicle.

Docking of the automated guide vehicle should be understood as navigating the automated guided vehicle from the docking start position to the object handling position by one or more predetermined navigation steps. It should be mentioned that the docking may include navigating the AGV from the alignment position according to one or more predetermined navigation steps.

Accordingly, the present invention has the effect that the alignment position from where a predetermined navigation step is to be performed can be determined autonomous and thereby in real-time i.e. as the automated guided vehicle is moving towards the object target position. Thereby, the present invention is solving the problem of mismatch between a digital representation / digital coordinates of the location of an object or where to position an object and the actual (real world) coordinates of an object or where to position an object. Hence minor displacement of one or more objects in a row can be accounted for.

Such minor displacement could also be referred to as object drifting, i.e. when an object is not positioned exactly on the expected coordinates, then a subsequent object may also not be positioned correct and thereby if e.g. five objects are not positioned precise e.g. according to a digital map of the warehouse floor, the fifth may overlap the target position of the sixth object. **In** this situation there is a risk that the automated guided vehicle or the sixth object will collide with the fifth object or the automated guided vehicle will stop operation because an object is already positioned at least partly at the coordinates it has for the positioning of the sixth object.

**In** an exemplary embodiment of the invention, the alignment position is determined as a position on said first part of said path, preferably in front of said turning center of said automated guided vehicle.

**In** front of said automated guided vehicle should be understood with reference to the direction of movement along the first part of the path.

Based on the input described above, the controller may determine the alignment position prior to the automated guided vehicle reaching this position, thus the automated guided vehicle may continue moving along the first part of the path even when the alignment position is not yet determined.

It should be mentioned that the automated guided vehicle may have passed the alignment position when the controller has established it. Thus, in this situation, the movement of the automated guided vehicle is stopped and subsequently continued back in the direction from where it came, still along the first part of the path.

The object target position center line should be understood as a virtual line from center of the object target position perpendicular to the direction of the first path. When the turning center of the automated guided vehicle is aligned with this line, the automated guided vehicle is able to perform a 90degree turn thereby facing the object target position with its tines.

The turning center may obviously be different from one type of automated guided vehicle to another in that wheel configuration of the automated guided vehicles may be different. Thus, in one automated guided vehicle, the turning center may be between tines and in another under the automated guided vehicle body.

**In** an exemplary embodiment of the invention, the controller determines perpendicular intersection of said object target position center line and said first part of said path based on information received from said primary sensor.

This is advantageous in that in this way the controller is able to determine if the front of the object to be picked up is parallel to the direction of movement of the first part of the path.

**In** an exemplary embodiment of the invention, the controller determines an angle adjustment required for said first part of said path to be parallel with the front of said object

**In** an exemplary embodiment the first predetermined navigation step include performing a 90degree turn of said automated guided vehicle so that said at least one tine points towards said object target position.

Accordingly, the second part of the path may be a 90 degree turn of the automated guided vehicle. If the front of the object or if the engagement positions of the object such as pallet pockets are not perpendicular to the first direction of the path, then the predetermined navigation step may not necessarily be 90 degrees. The predetermined navigation step ensures parallel alignment of the tine and e.g. pallet pockets.

In an exemplary embodiment, the navigation of said automated guided vehicle include a further predetermined navigation step, wherein said further predetermined navigation step include moving said automated guided vehicle along said third part of said path towards said object target position a distance determined by said object dimension information.

Now that the automated guide vehicle is aligned with the object target position, it is possible to navigating the automated guided vehicle a distance towards the object target position based solely on information of the object. As the exact position of the automated guided vehicle is known relative to the object target position the controller is able to determine a distance to move the automated guided vehicle to reach the object handling position where positioning of the object is in alignment with the object target position / where the object picked up.

The distance of the third part of the path when docking may be determined by the dimension of the object to be positioned or where on the tine the object is position (the latter may be determined by the primary sensor).

In an exemplary embodiment of the invention, the controller during said predetermined navigation step and / or said further predetermined navigation step is controlling movement of said automated guided vehicle independent of input from said primary sensor and from said secondary sensor.

This is advantageous in that it has the effect that a guaranteed movement of the automated guided vehicle is provided i.e. no interruption from a sensor that may or may not correctly register obstacles. Thus, faster and more precise navigation of the automated guided vehicle is obtained.

Input from the sensors can be avoided because of an assumption that no obstacles can be present in the turning radius of the automated guided vehicle i.e. the area covered by the automated guided vehicle when turning 90 degrees i.e. is navigated along the second part of the path.

In an exemplary embodiment of the invention, the minimum width of said predefined corridor is determined by an automated guided vehicle diagonal size.

A width of the corridor equal to the diagonal size of the automated guided vehicle is advantageous in that the less space needed for corridors, the higher number of rows of objects can be provided on the warehouse floor.

In an exemplary embodiment of the invention, the corridor comprises at least one side defined by a row of object target positions.

In an exemplary embodiment of the invention, the at least part of said first part of said path is on the half of said corridor closest to the object target position where said automated guided vehicle is to pick-up or drop-off an object.

In an aspect, the invention relates to an automated guided vehicle comprising two tines each comprising a tine wheel, a drive wheel positioned under the automated guided vehicle in the middle of two caster wheels positioned at opposite sides of the automated guided vehicle, a primary sensor, a from sensor and a controller,
wherein said controller is associated with a data storage comprising control software based on which said controller is configured to control the automated guided vehicle on a path between a start position and an object handle position via an alignment position and a docking start position,
wherein said data storage furthermore comprises position information of a turning center positioned between said tine wheels, length information of a diagonal size of said automated guided vehicle and object dimension information,
wherein said controller is configured to autonomously determine an alignment position as the intersection of an object target position center line and a first part of said path along which said automated guide vehicle is configured to move, wherein said first part of said path is part of a predefined corridor,
wherein said controller is configured to control said automated guided vehicle to stop movement when said turning center is coincident with said alignment position and
wherein said controller is configured for navigating said automated guided vehicle, along a second part of said path, from said alignment position towards said docking start position, based on a first predetermined navigation step comprising turning said automated guided vehicle around said turning center so that said two tines points towards said object handle position,
wherein said controller is further configured for navigating said automated guided vehicle, according to a further predetermined navigation step at least partly based on input from said primary sensor a distance determined by said object dimension information along a third part of said path, from said docking start position towards said object handle position.

In an exemplary embodiment of the invention, the controller is furthermore configured to autonomously determine said object target position centreline based on information stored in said data storage and information provided by said front sensor and/or said primary sensor.

### The drawings

- Fig. 1: illustrates an AGV according to an embodiment of the invention,
- Fig. 2: illustrates different positions of the AGV from a start position to an object handle position of an embodiment, where the AGV is to pick-up an object,

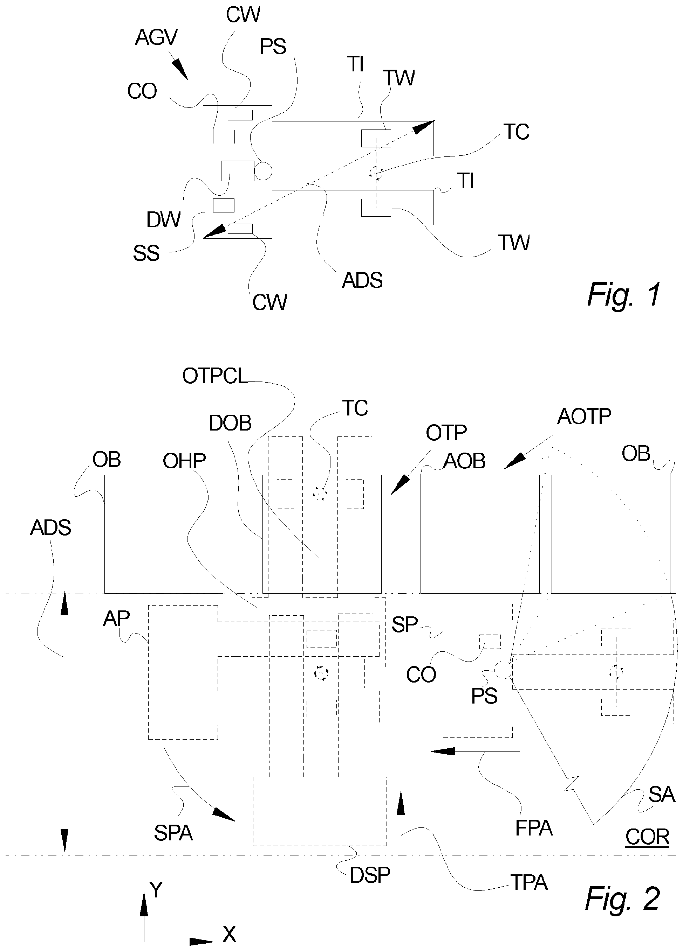

- Fig. 2-7: illustrates different positions of the AGV in an embodiment where the AGV is to drop-off an object,

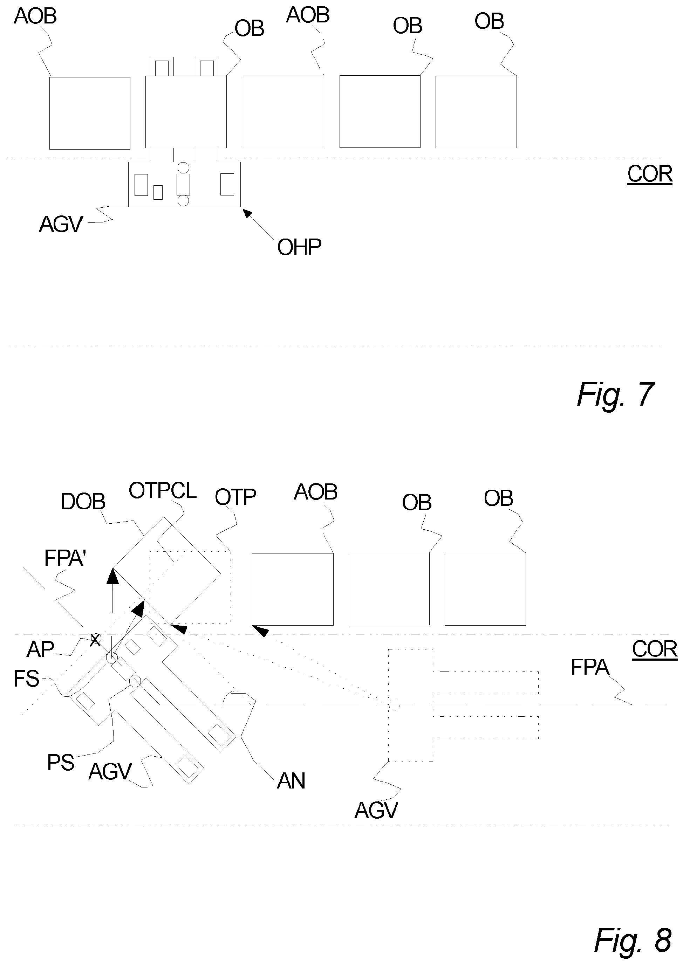

- Fig. 8: illustrates an embodiment where the AGV is to pick up an object which is not positioned correct, and

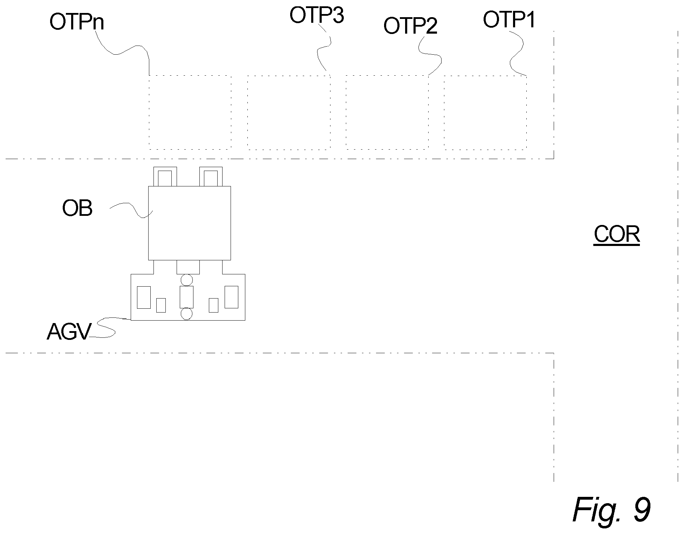

- Fig. 9: illustrate an embodiment where the AGC is to place the first object in a row of object target positions.

### Detailed description

The present invention is described in view of exemplary embodiments only intended to illustrate the principles and implementation of the present invention..

Fig. 1 illustrates schematically one example of an automated guided vehicle AGV according to the present invention. The automated guided vehicle AGV is also referred to simply as AGV in this document. Fig. 1 illustrates main parts of the AGV in a top view.

The AGV illustrated in fig. 1 comprises a fork having two tines TI thereby making the AGV suitable for lifting pallets carrying a load LO. A load may comprise an object OB positioned on a pallet and may also be referred to as an object. The actual position of the object OB may not be known by the controller in advance and only determined by the controller CO with reference to the location of the AGV and e.g. also based on sensor input from the surroundings of the AGV. Hence, by the known location of the AGV and e.g. also knowledge of the dimensions of the object (load and pallet), the controller CO is able to determine and record the actual position of the object OB at least when the engagement between tine TI and pallet is established.

It should be mentioned that when referring to an AGV with a fork, a reference is made to an AGV comprising one or more tines / prongs making the AGV suitable for lifting objects such as a pallet e.g. carrying a load or a pipe around which a load may be wrapped.

The illustrated AGV comprises a controller CO which is controlling the movement of the AGV. The movement include driving the AGV forward and backwards relative to the tine IT, turning the AGV clockwise and counter clockwise, lifting the tine TI, stopping the AGV, regulating speed of movement, etc. The control is made based on control software stored in a data storage associated with the controller i.e. part of or communicating with the controller CO and sensor input. The controller CO is further controlling the movement according to different operation modes. The controlled may be a standard programmable logic controller or a dedicated AGV controller specifically designed for its purpose. As known by the skilled person, the controller may in addition to the data storage also communicate with / comprise communication interface, position determining equipment such as global position system and other element needed for safely navigating the AGV.

The controller may, during normal operation allow the AGV to travel at a speed of e.g. 2m/s and in docking/undocking mode at one or more reduced travel speeds. One example of such reduced travel speed could be 0.3m/s. The speed and when to allow which speed may be determined e.g. by distanced to load so that the slowest speed is when the fork is closest to the load. In this way speed control can be provided based on distances to the load.

The control software may include a map of an area in which the AGV is to move. The map may include position of obstacles, allowed /non-allowed areas, target positions, start positions, corridors, etc. It should be mentioned that the map may be a virtual map that only comprises coordinates of map elements such as the above-mentioned obstacles, positions and obstacles.

The sensor input may be provided by a range of sensors. Most important with respect to the present invention is the so-called primary sensor PS and secondary sensor SS. But also, a tertiary sensor and additional sensors may provide relevant input.

The primary sensor PS is also referred to as a back sensor in that it is positioned opposite the direction of movement of the AGV when controlled according to a normal mode of operation. The primary sensor PS is typically of the distance sensor type and may be implemented as a scanning Lidar sensor which is an example of a commonly sensor type used for AGVs. Alternative, the primary sensor PS may be implemented as laser distance sensors.

Hence, from the primary sensor PS a change of distance between the AGV and the object OB during a time period can be established. A characteristics of the primary sensor PS is that it is dependent on reflecting objects for being able to measure a distance. The AGV may also comprise a front sensor also implemented as e.g. a scanning Lidar sensor. Thus, from the back and front sensors the controller may establish a digital representation of the surroundings of the AGV and thereby be able to locate itself and objects OB in the digital representation.

The second sensor SS is typically of a motion sensor type from which position over timed can be measured or derived. The secondary sensor SS may be implemented as an odometry sensor measuring distance travelled or a representation of distance travelled during a time period. A characteristics of the secondary sensor SS is that it is independent of objects for being able to perform measurements of the distance travelled by the AGV.

The tertiary sensor may be implemented as an inertia measuring unit using e.g. accelerometer and gyroscope to determine characteristics of movement of the AGV and distanced travelled by the AGV. Additional sensors may also be used. Such additional sensors may be of the type mentioned above or other types. An example of an additional sensor of an AGV is referred to as a front sensor which is located opposite the tine and used with the AGV is moving in the normal mode of operation. To the category of the additional sensors is also corner sensors belong, such corner sensors may be of the scanning Lidar type as the primary sensor. Further, to the category of additional sensors, also belong angular odometers via which an angle turned by the AGV can be determined.

The illustrated AGV comprise different types of wheels including a drive wheel DW, two caster wheels CW and two tine wheels TW. The drive wheel DW is typically positioned under the center of the AGV, whereas the caster wheels CW may be positioned at the center of each of the sides of the AGV. The tine wheels TW are located as support for the tines TI when the lift the object OB / load.

The AGV control system may in addition to the controller CO comprise a safety controller (not illustrated). The robot control system may control establishment of planned robot routes, sub routes, manoeuvring the AGV (via the wheels), and execution of a Monte Carlo localization algorithm for determining the location of the AGV in the physical environment including various obstacles. The safety controller provides safety functionalities, such as emergency braking for avoiding collisions with people and obstacles.

The robot control system and the sensory system including the above-mentioned sensors are communicatively connected, such that measurements performed by the scanning Lidar sensor can be provided to the control system, such that these measurements can be processed. The input to the control system from the sensors of the sensory system can thus serve as basis for manoeuvring and localizing the AGV.

Optionally, the control system further provides a AGV state indicative of current operational status of the AGV. For example, a first possible state is indicative of normal operation of the AGV and a second state is indicative of restricted movability of the AGV.

It should be noted that other types of AGVs may be controlled according to the present invention. One type is comprising a sensory system in the form of two scanning Lidar sensors, placed in opposite corners of the AGV therefore referred to as corner sensors. Given the positioning of the corner sensors a scan signal is permitted to travel into the robot surroundings from the corner scanners, each of the two corner scanners may be able to scan approximately an angle 270 degrees. The corner scanners are thus efficiently able to horizontally cover all 360 degrees around the AGV.

In this embodiment, the AGV comprises caster wheels in each corner and a drive wheel in the center of each side of the AGV. Some of these wheels are responsible for supporting and some for moving and steering the AGV. Some wheels are associated with one or more odometers, which provides an indication of a distance travelled by the AGV. This is useful for supporting navigation, particularly when there are no obstacles in the surroundings of the AGV which can use for determining its location, e.g., relative to an area map. In other embodiments, the same wheels are used for steering and odometry.

Moreover, the AGV according to this embodiment may comprise a support surface for receiving items to be transported by the AGV. The support interface may be implemented as a fork for lifting e.g. a pallet at one of the ends of the AGV. Alternatively, the AGV may be intended to drive under the object / load for lifting and transporting the load which may be positioned on a rack on the body of the AGV.

A diagonal size of the AGV denoted ADS is illustrated from one corner of the AGV to (in this embodiment) the corner of an opposite tine. The diagonal size specifies the space needed to turn the AGV such as the minimum width of a corridor in which the AGV is to perform a 90 degree turn. It should be noted that the diagonal size ADS of the AGV may increase if the AGV carries an object. This is true if the length from the one corner of the AGV to the opposite corner of the object is longer than the length of the illustrated diagonal size ADS.

A turning center TC of the AGV denoted TC is illustrated between the two tine wheels. For this particular AGV, the turning center TC is between the tine wheels TW, for other types the turning center TC may be different relative to the AGV. The turning center TC is defined as the point or center of a circle the circumference of which is defined by e.g. the drive wheel DW, when the AGV is making a turn by turning the drive wheel 90 degrees.

Fig. 2 illustrates different positions of an AGV as it is navigated along a path in a corridor COR to an object target position OTP where it is to pick-up an object OB. The path may start prior to the start position illustrated in fig. 2 and end at the object handling position OHP. Since the AGV is illustrated in different positions on the path, it is illustrated in dashed lines. Further, a scanning area SA of the primary sensor PS is included only on the AGV positioned in the start position SP knowing that the primary sensor is part of the AGV in all positions. Also note that the illustrated scanning area SA may be wider then illustrated, thus the illustrated scanning area SA is only an example serving to support understanding of the principles of the present invention. Also note that some of the scanning area SA is hidden by objects and therefore illustrated in dashed lines.

An important function of the primary sensor PS is to scan the area to the sides of the AGV at least while approaching the target position TP of the object to be handled / object handle position OHP in order to identify and determine the exact position of objects OB, pallets or other elements which are next to the target position TP, partly on the target position TP and/or which are on the target position TP. Hereby the AGV controller is able to calculate the optimal alignment position AP and when the AGV arrives at this position. Further, the controller is able to calculate the optimal docking start position DSP and ensure a smooth driving and docking operation from the alignment position AP to the object handle position OHP and thereby ensuring that objects, pallets and/or other elements are placed at a desired distances relative to each other. The desired distance should be understood as an optimal distance from the object to be place to a neighbouring object already located. Further, it should be noted, that similar to placing an object, also when picking up an object, the primary sensor PS is advantageously scanning to the sides of the AGV for the controller hereof to ensure smooth driving, docking and undocking between alignment position and object handling position.

The width of the corridor COR is at least the same as the length of the diagonal size ADS of the AGV for making the AGV able to perform a 90 degree turn within the defined corridor COR. It should be mentioned that preferably the width of the corridor is equal to the diagonal size of the AGV plus an additional distance (not illustrated in fig. 2). This is to compensate for misalignment of the AGV in the corridor, inaccurate positioning of the AGV, different size objects to be carried by the AGV, etc.

The turning center TC of the illustrated AGV is between the tine wheels TW which is towards the ends of the tines TI. Therefore, when turning around the turning center, the AGV need more space towards the drive wheel end than towards the tine wheel end. Hence, when navigated along the first part of the path FPA, the main part of the AGV is moving between the middle of the corridor COR and the side of the corridor defined by the (row of) object(s) / target positions to be handled by the AGV. As mentioned, other types of AGVs may have other turning centres TC and therefore another position when navigated along the first part of the path FPA in the corridor COR.

The AGV is illustrated in a start position SP at a first part of the path FPA. Along the first part of the path FPA, the AGV is controlled according to a normal mode of operation based on input from the above-mentioned sensors scanning the areas around the AGV and monitoring the AGV (acceleration, speed, travelled distance, etc.). The first part of the path FPA may be any distance travelled by the AGV prior to the AGV reaches the alignment position AP.

The exact location of the AGV following the first part of the path FPA in the corridor COR may be determined by the drive wheel DW or by the position of the turning center TC in the corridor i.e. the floor beneath the turning center TC.

As mentioned, a scanning area SA of the primary sensor PS, of the AGV is illustrated in the start position SP. Based on the input from this primary sensor PS, the controller CO is able to determine when passing an objects OB located at object target positions OTP in the row of objects. This information may be used by the controller CO to keep track on where it is relative to the object target positions OTP defining the row of objects OB. In other words, the controller CO is thus able to find the desired object target position OTP where it is instructed to pick-up or drop-off an object by keeping track on how many objects OB or empty object target positions OBT it has passed.

According to the present invention, the controller CO is using input from the primary sensor to determine the object target position OTP where to pick-up or drop-off the desired object DOB. This is true, at least when the AGV reaches the target position which is the adjacent object target position AOTP to the desired object DOB. In this way the adjacent object target position AOTP is used to find the desired object DOB.

The controller CO of the AGV in the start position SP in fig. 2 know the number of the object target position OTP in the row where it is to (in this particular embodiment) pick-up a desired object DOB. Further, the controller CO may know the geometry of the objects OB positioned on the individual object target positions OTP. Thus, the controller CO is able to identify part of the information received from the primary sensor PS as e.g. corners of an object and thereby how many objects it has passed. Alternative or in addition, if the object target position OTP is empty, the controller CO may know that and in the same way know how many objects OB / object target positions OTP it has passed.

Therefore, the controller CO of the AGV in the start position SP in fig. 2 know that the object OB that is currently scanned is number two before the desired object target position OTP. Accordingly, the controller CO know, that the next object to be scanned is located at the object target position adjacent to the object target position OTP where the AGV is to pick-up the desired object DOB.

As the AGV is continuing along the first part of the path FPA, the primary scanner continues to scan the area passed by the AGV and when the scanned area SA reflects the object adjacent to the desired object, the controller CO calculates the location of the alignment position AP, preferably as the AGV continues moving along the first part of the path FPA.

The location of the first part of the path FPA in the corridor is autonomously determined by the controller based on information of the turning center TC and of the diagonal size ADS. This location i.e. distance from a corridor side, is determined so that the intersection of the object target position center line OTPCL and the first part of the path becomes the alignment position AP. More specific so that the alignment position AP allows turning the AGV in the corridor without colliding with objects or obstacles defining the sides of the corridor.

With this said, the AGV may move through the middle of the corridor COR and when approaching the object target position OTP move towards one side of the corridor COR to allow alignment of the turning center TC with the alignment position AP.

An object position center line OTPCL may be determined from input from scanners and information of object geometry. The input from scanners may lead to positioning of adjacent objects AOB (if any) which then may be used by the controller to determine the actual position of the object target position OTP / adjust the predetermined digital position (coordinates) of the object target position OTP. Thus, when the actual position of the object target position is determined, it is easy for the controller to find the mid of the object target position and establish a center line which is parallel to the sides of the established object target position.

This way of determining the object target position center line may be used independent of orientation of adj acent objects in the drop-off situation and independent of the desired object to be picked up in the pick-up situation.

It should be noted that even though the present inventio in this document describes to determine the alignment position AP from the object target position center lined OTPCL, the alignment position AP may also be found without information of the object target position center line OTPCL. Instead, e.g. sides of the desired object DOB or other scannable objects or measured distance from a known position, may be used to determine the location of the alignment position AP.

When determined, the controller may draw a virtual line / establish coordinates for this line and thus be able to determine when tines of the AGV are parallel to this line and thus ready to move towards the object target position.

The alignment position AP is determined based on information of the turning center TC of the AGV, of the adjacent object AOB (if any) and of the desired object DOB. Such information is either received from a sensor, preferably of the AGV or from information stored in a data memory, preferably of the AGV.

The relevant information related to the adjacent object AOB may include information related to position of the corner of the adjacent object facing the desired object DOB, distance from the corner of the adjacent object facing the desired object DOB to the corner of the desired object facing the adjacent object AOB, angle of the front of the adjacent object AOB to the direction of the first part of the path FPA (to determine how far from parallel this front is to this direction if not parallel), etc.

The relevant information related to the desired object DOB may include information related to position of the corner of the desired object facing the adjacent object AOB, geometry including distance from the corner of the desired object facing the adjacent object AOB to the object target position center line OTPCL, angle of the front of the desired object DOB to the direction of the first part of the path FPA (to determine how far from parallel this front is to this direction if not parallel), etc.

Note that an object target position center line OTPCL may refer to the center line of an object and of an object target position without an object.

Accordingly, the controller CO is able to calculate or determine how far along the first part of the path FPA to continue moving before arriving at the alignment position AP. The alignment position AP is reached when a 90 degree turn of the AGV result in positioning the AGV in the docking tart position. Hence, e.g. when the turning center TC is coincident with the object target position center line OTPCL.

At least an X coefficient / value of the alignment position AP may be found in this way. The X value may be defined as a position along the first part of the path FPA. Accordingly, the alignment position AP also may comprise an Y coefficient / value defining the distance from the object such as from the front of the object target position to the alignment position AP. Hence, the autonomous establishing of the alignment position AP may also include defining an Y value. In the ideal scenario where the front of all objects is aligned forming one side of the corridor COR, the Y value may be predetermined. However, if the front of one or more objects deviates from such corridor side, the Y value need to be adapted accordingly to ensure sufficing space for turning the AGV. Therefore, based on information receive e.g. from scanners, the controller is able to determine an Y value for the particular object to be picked-up (or dropped off).

As an example, if one or two adjacent objects AOB are available, the position of the corners / front hereof is identified from the scanning information and from this information a "front line" / corridor side can be established. With reference to such front line / corridor side, the controller is able to define a minimum distance along the object target position center line OTPCL from the front line / corridor side for the location of the alignment position AP.

Further it should be mentioned that the alignment position may be determined by the controller CO based on geometry information of the desired object DOB. Thus, if the desired object is large in size thereby increasing the total diagonal size ADS of the AGV, the alignment position may be moved accordingly to ensure safe turning of the AGV. To allow this, the corridor width should be larger than the diagonal size of the sole AGV i.e. the width should be the diagonal size ADS plus an additional distance which may be determined by the diagonal size ADS of the AGV carrying such large object.

In an embodiment, before controlling the AGV along the second part of the path SPA based on the predetermined navigation step, the angle for the front of the desired object DOB and the direction of the first part of the path FPA to be parallel, may be determined by scanning the front of the desired object DOB. Such scanning may require the AGV to pass by the desired object i.e. passing by the alignment position AP or using information from both of a front and a back scanning Lidar sensor, etc.

The moving of the AGV along the second part of the path SPA according to the predetermined navigation step is preferably made without input from any scanning sensors. The turn may be effectuated by control of rotation of the drive wheel DW preferably a 90 degree turn of the drive wheel and measuring of time of movement along the second part of the path, measuring degrees turned by an angular odometer, using a positioning system (global or local), etc.

Typically, to reach the desired turn i.e. turning the AGV the number of degrees required for ensuring that the object target position center line OTPCL and the tines TI are parallel, the controller may receive input from one or more encoders.

Prior to initiate movement along the second part of the path SPA, an angular encoder may provide information of the angular position of the drive wheel DW e.g. drive wheel angle with reference to the direction of movement of the first part of the path FPA. To ensure the AGV is turning around the turning center TC, the angle of the drive wheel DW should be turned 90 degrees.

A wheel encoder may provide information of the travelled distance of the drive wheel DW. In the ideal scenario where the object OB is parallel to the direction of the first part of the path FPA, the travelled distance is one fourth of the circumference of a circle followed by the drive wheel DW having its center in the turning center TC. But depending on the angle between the front of the desired object DOB and the direction of movement of the AGV when reaching the alignment position AP, more or less than one fourth of the circumference may be travelled.

When the alignment position AP is reached and the front of the desired object DOB is parallel with the direction of the first part FPA and thereby with the AGV, the controller CO is controlling the AGV to follow the second part of the path SPA according to a predefined navigation step. In the situation where the front of the desired object DOB is parallel to the direction of the first part of the path FPA, the predefined navigation step is a 90 degrees turn of the drive wheel DW and a subsequent moving of the AGV along one fourth of the circumference of a circle having its center in the turning center TC resulting in the tines TI pointing towards the desired object DOB and parallel to the object target position center line OTPCL.

When the alignment position AP is reached and the front of the desired object DOB is not parallel with the direction of the first part FPA and thereby with the AGV, the controller CO first calculate the misalignment angle to parallel and then compensate the predetermined navigation step with this alignment angle. Hence, in this situation the predetermined navigation step still includes a 90 degree turn of the drive wheel DW, but the part travel along the circumference of the circle with center in the turning center TC is compensated with the misalignment angle. In this way, the travelled part of the circumference can be a bit more or a bit less than the fourth of the circumference of the circle (depending on how far from parallel the front of the object and the direction of the first part is).

As described, the controller CO autonomously determines the alignment position i.e. without knowing the position hereof beforehand and without being assisted by input external from the AGV. Further, the controller CO carries out the predetermined navigation step leading to the AGV is following a second part of the path SPA without the use of scanning Lidar sensors (it should be noted that scanning Lidar may be necessary for safety reasons, without being used for control purpose). Thereby the AGV can be controlled so precise that the width of the corridor COR can be reduced, ultimately, to the length of the AGV diagonal size ADS.

The resulting position of the AGV after the predetermined navigation step is in the docking start position DSP. When the AGV is positioned in the docking start position DSP, the tines TI should be parallel to the object target position center line OTPCL or at least substantially parallel to the object target position center line OTPCL.

As illustrated in fig. 2, during the second part of the path SPA, the AGV is turning around the turning center TC which is key to reduce the width of the corridor COR and the time of the docking procedure. This is because, no space and time is needed for the AGV to move forth and back to align the tines TI with the object target position center line OTPCL based e.g. on input from scanners.

From the docking start position DSP, the controller CO then control the AGV along the third part of the path TPA towards the desired object DOB. This part of the control of the navigation of the AGV can be made based on the above-mentioned information available of the desired object DOB. Hence, because the tines TI of the AGV is parallel to the object target position center line OTPCL and the alignment of the turning center TC with the alignment position AP, the controller CO know the distance to move the AGV along the third part of the path TPA for the AGV to reach the object handle position OHP.

Accordingly, the controller CO may only need input from an odometer, accelerometer or the like to determine the distance travelled by the AGV to reach the object handling position OPH and thus end the travel along the third part of the path TPA of the AGV.

With this said, a scan or distance measurement may be made prior to the controller CO initiate moving along the third part of the path TPA. Such scan or measurement may serve to identify or verify the position of engagement positions of the object such as pallet pockets, distance from the AGV to the object OB, etc.

It should be noted that input from other sensos than the mentioned may be used to improve the control of the AGV, increase safety, ensure redundancy, confirm control of the AGV is carried out as expected, etc. such sensors may include the primary sensor (back sensor), a front sensor (such as a scanning Lidar sensor as the back sensor), laser distance sensor, stop sensor, emergency sensor, etc.

The information known / accessible by the controller CO related to e.g. objects may be information stored digitally in a memory with which the controller CO is able to communicate.

It should be noted that the AGV may also be navigated based on other principles than described above. Further, it may also use a front sensor (scanning the area that the AGV is about to pass) instead of the primary sensor (scanning the areas that the AGV has just passed) to determine the desired object target position OTP.

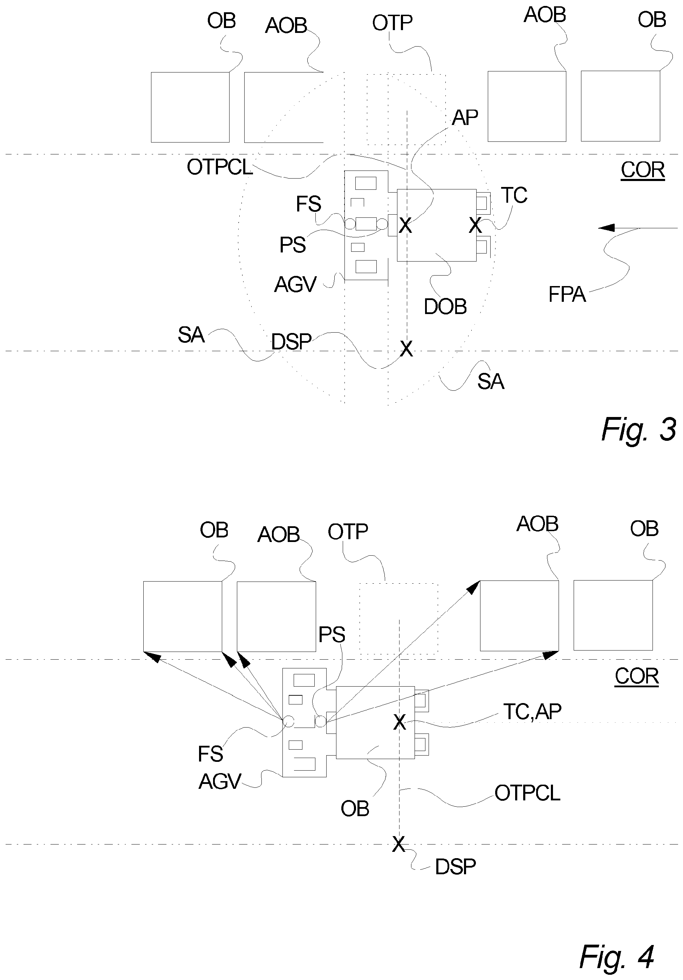

Figs. 3-6 illustrates an embodiment of the present invention, where the AGV is approaching an object target position OTP with a desired object DOB that is to be dropped off at the object target position OTP.

The AGV of this embodiment comprises, in addition to the back sensor (primary sensor PS), a front sensor FS. The scanning area SA of these sensors are illustrated as dotted half circles which, as the AGV is moving along the first part of the path FPA, is scanning the adjacent objects AOB on both sides of the object target position OTP. Based on the information received from the scanners and information comprised regarding geometry of the objects, the controller is able to identify the object target position OTP and the object target position center line OTPCL hereof.

The position of the AGV illustrated in fig. 3 is on / along the first part of the path FPA. The position of the AGV is so that the turning center TC is not yet aligned with the alignment position AP. Thus, the AGV is still moving in the direction of the arrow illustrating the direction of movement along the first part of the path FPA.

The control of the moving of the AGV along the first part of path FPA may be as described above in relation to picking up a desired object.

Fig. 4 illustrates the AGV in the position where its turning center TC is coincident with the alignment position AP, thus when moving along the first part of the path FPA terminates.

Arrows on fig. 4 illustrate sensor readings of the adjacent objects AOB which is used by the controller CO to determine the position of the AGV relative to the object target position center line OTPCL.

The reason for indicating scanning information from both the front sensor FS and primary (back) sensor PS is that the object carried by the AGV may block or reduce scanning area of the primary sensor PS. Hence, in such situation, the controller may benefit from input from a front sensor FS which can be used in the same way as input received from the primary sensor PS as described above.

The autonomous determination of the alignment position AP and the alignment of the turning center TC with the alignment position AP may be as described above in relation to picking up a desired object.

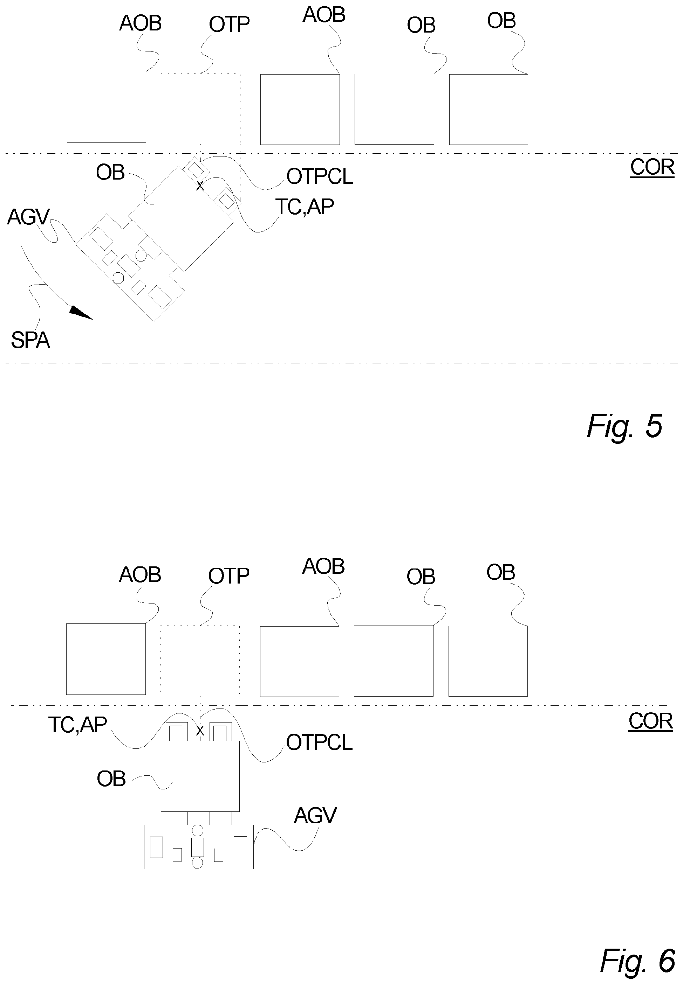

Fig. 5 illustrates the AGV on / along the second part of the path SPA. As illustrated the wheels are turned 90 degrees. More specifically, the drive wheel positioned between to front and primary sensors are mechanically turned under control of the controller. The caster wheels at the sides of the AGV is simply turning as the turned drive wheel initiate moving of the AGV.

The control of the AGV on / along the second part of the path SPA may be as described above in relation to picking up a desired object.

Fig. 6 illustrates the AGV in the docking start position DSP i.e. with its tines parallel to the object target position center line OTPCL. As described above in relation to the pick-up embodiment illustrated on fig. 2, in the ideal scenario, the AGV has moved a fourth of a circumference of a circle with center in the turning center TC / alignment position AP to reach the docking start position DSP.

Fig. 7 illustrates the AGV in the object handling position OHP i.e. after it has been moving along the third part of the path TPA. The exact location of the object handling position may as describe above be determined based on scanning or distance measurement when the AGV was in the docking start position DSP or as it moves along the third part of the path TPA.

Also as mentioned, the control of the AGV along the third part of the path TPA may be based solely on an odometer providing information to the controller of the distance travelled.

Once positioned in the object handling position OHP, the AGV in this embodiment lowers the tines and thereby positioning the desired object DOB at the object target position OTP such as on a warehouse floor.

From this position, the AGV is undocking i.e. leaving the object handling position, in this embodiment, without the object. The undocking of the AGV may follow the docking procedure in reverse order i.e. moving towards the docking start position DSP until the turning center TC is aligned with the alignment position AP, turning the AGV (clockwise or counter clockwise after which direction it is to move when leaving) and leaving e.g. parallel to the row of objects / object target positions.

Fig. 8 illustrates an AGV which is to pick up a desired object DOB the front of which is not aligned with the adjacent object AOB. This is another example of the strength of the present invention, that the AGV autonomous is able to determine the alignment position AP also when objects are not aligned in a row as expected.

As illustrated by the stipulated AGV following first part of the path FPA, the AGV is approaching the object target position OTP parallel to the row defined by the objects OB. As describes above, the sensors (front and back) are scanning the adjacent object AOB and thereby the controller knows that at the next object target position OTP, the desired object DOB is positioned.

Further, the controller receives scanning information of the desired object DOB and from this, the controller is able to determine the orientation of the desired object. More specifically the angle AN between of the front of the desired object and the direction of the first part of the path FPA.

Based on this angle AN, the controller is able to change direction of movement of the AGV along the first part of the path FPA. In fig. 8 the new direction is denoted FPA' and is parallel to the front of the desired object DOB.

It should be noted, that the new direction FPA' does not have to be parallel to the front of the desired object DOB. What is important is that the alignment position AP is still autonomously established by the controller of the AGV and that the turning center TC of the AGV is able to be positioned at the alignment position AP. As in the above-described embodiments, if the direction of movement is not parallel to the front of the desired object DOB, the length of the second part of the path SPA is adjusted accordingly. Thus, this distance is a bit more or a bit less than the fourth of a circle with center in the turning center TC depending on the angle AN.

Obviously, if the front of a desired object DOB is out of line / not parallel to the corridor side / row of object target positions, the front sensor FS may be used to ensure that the AGV does not collide with obstacles / objects now that it is heading out of the predetermined corridor COR. Crossing a corridor side is normally not allowed and would typically require human interaction, but with the present invention, operation of the AGV can continue. Not only continue, but continue as desired i.e. by picking up the desired object DOB.

It should be noted that the controller may break away from normal control routines. In fact, it may be so, that the controller needs to turn the AGV 180 degrees prior to arriving at the alignment position AP so that it is moving with its tines in front. Then subsequently control the second part of the path SPA as a clockwise turn which is contrary to the above described and counter clockwise turn of the second part of the path SPA.

Fig. 9 illustrates an AGV during positioning of the first object in a row of object target positions OTP1- OPTn. The exact object target position of the at which the object OB is to be placed is not important in that the principles are the same. The main principle of locating the desired object target position OTP is to measure / determine the start of the row and then based on knowledge of the size of each of the object target positions determine when the correct is reached. The positioning of the object is as described above.

Typically, a marker or a structural obstacle can be used to assist the AGV in determining where the first object target position is located. Alternatively, or in addition, the row, corridor and / or target positions may be defined by one or more sets of X and Y coordinates. As described, the Y coefficients may be used to assist the AGV in aligning the objects in a row so that the front of the objects are in a straight line, preferably defining one side of the corridor or at least is parallel to a side of the corridor.
In an exemplary embodiment of the invention, the controller is using a guiding marker when determining said alignment position AP.

Using guiding markers is advantageous when a new row is to be started and thus there is no existing / adjacent objects to use in determining the alignment position. A guiding marker may be used in combination with a digital map of the area of the row to navigate to, the first part of said path or to find / determine an alignment position. A guiding marker may be a structural marker such as building part or a marker having a geometry which is easy to recognize by the automated guided vehicle.

It should be mentioned that the use of a guiding marker may be weighted higher than an adjacent object when determining / updating the position of the automated guided vehicle.
In an exemplary embodiment of the invention, the object target position information include at least one predetermined X or Y value of a set of (X,Y) coordinates specifying said object target position OTP.

The object target position may be specified by one or more (X,Y) coordinates. A center point of the object may be positioned at a specific center point of the object target position defined by a set of (X,Y) coordinates. Alternative, corners of the object is aligned with four sets of (X,Y) coordinates defining corners of the object target position.

An X value of a set of (X,Y) coordinates of an object target position may be a position along the first part of the path i.e. a position parallel to a corridor side. An Y value of a set of (X,Y) coordinates of an object target position may be a position located a distance from the X value i.e. along a direction perpendicular to e.g. the corridor side and direction of the first path.

By specifying an X value for one or more object target positions, the distance between two objects may be predetermined. By specifying an Y value for one or more object target positions, the front of the objects may be aligned.

Determining an object target position from a set of (X,Y) coordinates is especially advantageous if it is a first object target position of a row of object target positions.

In an exemplary embodiment of the invention, the alignment position AP is defined by an Y value specifying a distance from a front of an object target position OTP to said alignment position AP.

In an exemplary embodiment of the invention, the location of a front of a desired object DOB is determined autonomous by said controller CO based on information received from a sensor.

This is advantageous in that then it is ensured that the alignment position is sufficiently distant from the desired object so that safe turning of the AGV can be made. Sensors should include at least one of the primary and front sensors scanning the AGV surroundings but could also include distances sensors.

In an exemplary embodiment of the invention, the alignment position AP is defined by an Y value calculated based on geometry of a desired object DOB.

This is advantageous in that the alignment position can be adapted to the object that is to be picked up or dropped off. Such calculation of Y value may be made real time as the AGV is moving or when object geometry is available. If the Y value is predetermined, the calculation can be made external to the AGV.

In an exemplary embodiment of the invention, the controller CO adjust the degree of turning of said second part of said path SPA with said angle adjustment AN.

This is advantageous in that then the automated guided vehicle is controlled to approach the object perpendicular to the front of the object no matter the orientation of the object.

This is advantageous in that it has the effect, that the automated guided vehicle is able undock and pick up an object that is not aligned with the direction of movement along the first part of the path i.e. parallel to the first part of the path.

The adjustment required can result in both a second part of the path turning that is above and below 90 degrees depending on the non-alignment of the object.

In an exemplary embodiment of the invention, the automated guided vehicle AGV is controlled to move in three different directions depending on in which of the first, second and third parts of the path FPA, SPA, TPA the automated guided vehicle is.

In the first part, the tine is pointing away from direction of movement, in the second part, the automated guided vehicle is moving sideways / turning and in the third part, the time is pointing towards the direction of movement. This is advantageous in that it has the effect that the width of the corridor can be reduced.

In an exemplary embodiment of the invention, the controller receives input from said primary and said secondary sensor when navigating said automated guide vehicle along said first and third path of said path FPA, TPA.

The primary sensor may be a scanning lidar sensor whereas the secondary sensor may be of an odometer type of sensor.

In an exemplary embodiment of the invention, the minimum width of said predefined corridor COR is determined by said automated guided vehicle diagonal size ADS plus an additional distance.

Including an additional distance to the width of the corridor is advantageous in that in this way it is ensured that sufficient space in the corridor is provided also for an automated guided vehicle carrying an object which increases the diagonal size of the automated guided vehicle. Also, space is in this way provided for turning if the turning or positioning of the automated guided vehicle is not completely precise

In an exemplary embodiment of the invention, both sides of said corridor COR is defined by rows of object target positions OTP.

Having a corridor defined by two rows of object target positions is advantageous in that due to the possibility of engaging with objects of two rows from the same corridor footprint on the warehouse floor is reduced.

In an exemplary embodiment of the invention, the location of said first part of said path FPA in said corridor COR is determined by said turning center TC.

This is advantageous in that thereby is allowed a corridor width that does not exceed the diagonal size of the automated guided vehicle (maybe with an additional turning safety margin). A turning center between tine wheels may dictate the first part of the path to be closer to the side of the object to be picked up or dropped off, whereas a turning center at the middle of the automated guided vehicle (without tine) may dictate a first part of the path along the middle of the corridor.

In an exemplary embodiment of the invention, the position of said automated guided vehicle AGV in a digital representation of an area of operation of said automated guided vehicle AGV is updated when said adjacent object is verified by said controller.

The digital representation of the areas of operation should be understood as a map that is comprised by or accessible by the controller. Updating the position of the automated guided vehicle is advantageous in that more precise control and planning of control of a fleet of automated guided vehicles can be provided.

In an exemplary embodiment of the invention, the controller associate information of content of said object with object target position OTP.

This is advantageous in that then a user can specify a content and the automated guided vehicle know where to this content.

In an exemplary embodiment of the invention, the controller CO is furthermore configured to control movement of said automated guided vehicle AGV from said first part of said path FPA to an object handling position according to at least one predetermined navigation step.

From the above it is now clear that the invention relates to an automated / autonomous guided vehicle referred to throughout this document as an AGV. The AGV is able to autonomous i.e. without human interaction and real time i.e. as the AGV is moving towards a target position, determine an aligning position AP. The position of the alignment position AP is in one direction (X) determined by an object target position center line OTPCL (or side of object, adjacent objects, markers or the like) which is also autonomously determined, verified or adjusted. In a second direction (Y) the alignment position is determined by the diagonal size ADS of the AGV so that when a turning center TC of the AGV is coincident with the alignment position, the AGV is able to perform a predetermined navigation step such as a 90 degrees counter clockwise turn without crossing one of two sides of a predefined corridor COR.

### List

- AGV.: Automated guided vehicle
- DW.: Drive wheel
- CW.: Caster wheel
- TW.: Tine wheel
- TI.: Tine (of fork)
- PS.: Primary sensor (back sensor)
- SS.: Secondary sensor
- FS.: Front sensor
- CO.: Controller
- ADS.: Diagonal size of AGV
- TC.: Turning center
- SA.: Scanning area
- AN.: Angle

- SP.: Start position
- TP.: Target position
- AP.: Alignment position
- DSP.: Docking start position / Undocking stop position
- OHP.: Object handle position
- OTP.: Object target position
- AOTP.: Adjacent object target position

- COR.: Corridor
- OB.: Object
- DOB.: Desired object
- AOB.: Adjacent object
- OTPCL.: Object target position center line
- FPA.: First part of path
- SPA.: Second part of path
- TPA.: Third part of path

## Claims

1. A method of controlling an automated guided vehicle (AGV) on a path between a start position (SP) and an object handle position (OHP) via an alignment position (AP) and a docking start position (DSP), said automated guided vehicle (AGV) comprising a turning center (TC), at least one tine (TI), at least one drive wheel (DW), at least two caster wheels (CW), a controller (CO), a primary sensor (PS) and a secondary sensor (SS),
wherein said control includes navigating said automated guided vehicle (AGV) in a predefined corridor (COR) along a first part of said path (FPA), towards said alignment position (AP),
wherein said control is **characterized in that** it includes navigating said automated guided vehicle (AGV), along a second part of said path (SPA), towards said docking start position (DSP), based on a first predetermined navigation step comprising turning said automated guided vehicle (AGV) around said turning center (TC) so that said at least one tine (TI) points towards said object handle position (OHP),
wherein said second part of said path (SPA) start at said alignment position (AP), and wherein said alignment position (AP) is autonomously determined by said automated guided vehicle (AGV) when said turning center is aligned with an object target position center line (OTPCL),
wherein said control includes navigating said automated guided vehicle (AGV) according to a further predetermined navigation step at least partly based on input from said primary sensor (PS) along a third part of said path (TPA), from said docking start position (DSP) towards said object handle position (OHP) a distance determined by said object dimension information, and
wherein said control includes stopping movement of said automated guided vehicle (AGV) when said automated guided vehicle (AGV) is aligned with said object handle position (OHP).

2. A method of controlling an automated guided vehicle (AGV) according to claim 1, wherein said alignment position (AP) is determined by said controller (CO) based on predetermined information of a turning center (TC) of said automated guided vehicle (AGV), predetermined object dimension information and predetermined object target position information.

3. A method of controlling an automated guided vehicle (AGV) according to claim 1 or 2, wherein said alignment position (AP) is furthermore determined by said controller (CO) based on a comparison of predetermined adjacent object dimension information of an object located at an adjacent object target position (AOTP) and input from said primary sensor (PS) scanning surroundings of said automated guided vehicle (AGV).

4. A method of controlling an automated guided vehicle (AGV) according to any of the preceding claims, wherein said alignment position (AP) is determined as a position on said first part of said path (FPA), preferably in front of said turning center (TC) of said automated guided vehicle (AGV).

5. A method of controlling an automated guided vehicle (AGV) according to any of the preceding claims, wherein said controller (CO) determines perpendicular intersection of said object target position center line (OTPCL) and said first part of said path (FPA) based on information received from said primary sensor (PS).

6. A method of controlling an automated guided vehicle (AGV) according to any of the preceding claims, wherein said controller (CO) determines an angle adjustment (AN) required for said first part of said path (FPA) to be parallel with the front of said object

7. A method of controlling an automated guided vehicle (AGV) according to any of the preceding claims, wherein said controller (CO) during said predetermined navigation step and / or said further predetermined navigation step is controlling movement of said automated guided vehicle independently of input from said primary sensor (PS) and from said secondary sensor (SS).

8. A method of controlling an automated guided vehicle (AGV) according to any of the preceding claims, wherein the minimum width of said predefined corridor (COR) is determined by an automated guided vehicle diagonal size (ADS).

9. A method of controlling an automated guided vehicle (AGV) according to any of the preceding claims, wherein said corridor (COR) comprises at least one side defined by a row of object target positions (OTP).

10. A method of controlling an automated guided vehicle (AGV) according to any of the preceding claims, wherein at least part of said first part of said path (FPA) is on the half of said corridor (COR) closest to the object target position (OTP) where said automated guided vehicle (AGV) is to pick-up or drop-off an object (OB).

11. A method of controlling an automated guided vehicle (AGV) according to any of the preceding claims, wherein said first predetermined navigation step comprises a 90 degrees turn.

12. A method of controlling an automated guided vehicle (AGV) according to claim 11, wherein said 90 degrees turn is compensated by a misalignment angle calculated by said controller (CO).

13. An automated guided vehicle (AGV) comprising two tines (TI) each comprising a tine wheel (TW), a drive wheel (DW) positioned under the automated guided vehicle (AGV) in the middle of two caster wheels (CW) positioned at opposite sides of the automated guided vehicle (AGV), a primary sensor (PS), a front sensor (FS) and a controller (CO),
wherein said automated guided vehicle (AGV) is **characterized in that** said controller (CO) is associated with a data storage comprising control software based on which said controller (CO) is configured to control the automated guided vehicle (AGV) on a path between a start position (SP) and an object handle position (OHP) via an alignment position (AP) and a docking start position (DSP),
wherein said data storage furthermore comprises position information of a turning center (TC) positioned between said tine wheels (TW) , length information of a diagonal size (ADS) of said automated guided vehicle (AGV) and object dimension information,
wherein said controller (CO) is configured to autonomously determine an alignment position (AP) as the intersection of an object target position center line (OTPCL) and a first part of said path (FPA) along which said automated guide vehicle is configured to move, wherein said first part of said path (FPA) is part of a predefined corridor (COR),
wherein said controller (CO) is configured to control said automated guided vehicle (AGV) to stop movement when said turning center (TC) is coincident with said alignment position (AP), and
wherein said controller is configured for navigating said automated guided vehicle (AGV), along a second part of said path (SPA), from said alignment position towards said docking start position (DSP), based on a first predetermined navigation step comprising turning said automated guided vehicle (AGV) around said turning center (TC) so that said two tines (TI) points towards said object handle position (OHP),
wherein said controller is further configured for navigating said automated guided vehicle (AGV), according to a further predetermined navigation step at least partly based on input from said primary sensor (PS) a distance determined by said object dimension information along a third part of said path (TPA), from said docking start position (DSP) towards said object handle position (OHP).

14. An automated guided vehicle according to claim 13, wherein said controller (CO) is furthermore configured to autonomously determine said object target position centerline (OTPCL) based on information stored in said data storage and information provided by said front sensor (FS) and/or said primary sensor (PS).

15. An automated guided vehicle according to any one of the claims 13 and 14, wherein said first predetermined navigation step comprises a 90 degrees turn, and wherein said controller is configured for establishing a misalignment angle and furthermore configured for compensating said 90 degrees turn by said misalignment angle.

## Patentansprüche

1. Verfahren zum Steuern eines fahrerlosen Transportfahrzeugs (FTF) auf einem Weg zwischen einer Startposition (SP) und einer Objekthandhabungsposition (OHP) über eine Ausrichtungsposition (AP) und eine Andockstartposition (DSP), wobei das fahrerlose Transportfahrzeug (FTF) ein Drehzentrum (TC), mindestens eine Zinke (TI), mindestens ein Antriebsrad (DW), mindestens zwei Lenkrollen (CW), eine Steuerung (CO), einen primären Sensor (PS) und einen sekundären Sensor (SS) umfasst,
wobei die Steuerung das Navigieren des fahrerlosen Transportfahrzeugs (FTF) in einem vorgegebenen Korridor (COR) entlang eines ersten Teils des Wegs (FPA) zu der Ausrichtungsposition (AP) hin einschließt,
wobei die Steuerung **dadurch gekennzeichnet ist, dass** sie das Navigieren des fahrerlosen Transportfahrzeugs (FTF) entlang eines zweiten Teils des Wegs (SPA) zu der Andockstartposition (DSP) basierend auf einem ersten vorbestimmten Navigationsschritt umfasst, der das Drehen des fahrerlosen Transportfahrzeugs (FTF) um das Drehzentrum (TC) einschließt, sodass die mindestens eine Zinke (TI) zu der Objekthandhabungsposition (OHP) zeigt,
wobei der zweite Teil des Weges (SPA) an der Ausrichtungsposition (AP) beginnt, und wobei die Ausrichtungsposition (AP) autonom durch das fahrerlose Transportfahrzeug (FTF) bestimmt wird, wenn das Drehzentrum mit einer Objektzielpositionsmittellinie (OTPCL) ausgerichtet ist,
wobei die Steuerung das Navigieren des fahrerlosen Transportfahrzeugs (FTF) gemäß einem weiteren vorbestimmten Navigationsschritt mindestens teilweise basierend auf Eingaben von dem primären Sensor (PS) entlang eines dritten Teils des Wegs (TPA) von der Andockstartposition (DSP) zu der Objekthandhabungsposition (OHP) über eine durch die Objektabmessungsinformationen bestimmte Entfernung einschließt, und
wobei die Steuerung das Stoppen der Bewegung des fahrerlosen Transportfahrzeugs (FTF) einschließt, wenn das fahrerlose Transportfahrzeug (FTF) mit der Objekthandhabungsposition (OHP) ausgerichtet ist.

2. Verfahren zum Steuern eines fahrerlosen Transportfahrzeugs (FTF) nach Anspruch 1, wobei die Ausrichtungsposition (AP) von der Steuerung (CO) basierend auf vorbestimmten Informationen eines Drehzentrums (TC) des fahrerlosen Transportfahrzeugs (FTF), vorbestimmten Objektabmessungsinformationen und vorbestimmten Objektzielpositionsinformationen bestimmt wird.

3. Verfahren zum Steuern eines fahrerlosen Transportfahrzeugs (FTF) nach Anspruch 1 oder 2, wobei die Ausrichtungsposition (AP) des Weiteren von der Steuerung (CO) basierend auf einem Vergleich von vorbestimmten Abmessungsinformationen eines benachbarten Objekts eines Objekts, das sich an einer benachbarten Objektzielposition (AOTP) befindet, und einer Eingabe von dem primären Sensor (PS), der die Umgebung des fahrerlosen Transportfahrzeugs (FTF) abtastet, bestimmt wird.

4. Verfahren zum Steuern eines fahrerlosen Transportfahrzeugs (FTF) nach einem der vorstehenden Ansprüche, wobei die Ausrichtungsposition (AP) als eine Position auf dem ersten Teil des Wegs (FPA) bestimmt wird, vorzugsweise vor dem Drehzentrum (TC) des fahrerlosen Transportfahrzeugs (FTF).

5. Verfahren zum Steuern eines fahrerlosen Transportfahrzeugs (FTF) nach einem der vorstehenden Ansprüche, wobei die Steuerung (CO) eine senkrechte Schnittstelle der Objektzielpositionsmittellinie (OTPCL) und des ersten Teils des Wegs (FPA) basierend auf von dem primären Sensor (PS) empfangenen Informationen bestimmt.

6. Verfahren zum Steuern eines fahrerlosen Transportfahrzeugs (FTF) nach einem der vorstehenden Ansprüche, wobei die Steuerung (CO) eine Winkelanpassung (AN) bestimmt, die erforderlich ist, damit der erste Teil des Wegs (FPA) parallel zur Vorderseite des Objekts verläuft.

7. Verfahren zum Steuern eines fahrerlosen Transportfahrzeugs (FTF) nach einem der vorstehenden Ansprüche, wobei die Steuerung (CO) während des vorbestimmten Navigationsschritts und/oder des weiteren vorbestimmten Navigationsschritts die Bewegung des fahrerlosen Transportfahrzeugs unabhängig von einer Eingabe des primären Sensors (PS) und des sekundären Sensors (SS) steuert.

8. Verfahren zum Steuern eines fahrerlosen Transportfahrzeugs (FTF) nach einem der vorstehenden Ansprüche, wobei die Mindestbreite des vorgegebenen Korridors (COR) durch eine Diagonalgröße (ADS) des fahrerlosen Transportfahrzeugs bestimmt wird.

9. Verfahren zum Steuern eines fahrerlosen Transportfahrzeugs (FTF) nach einem der vorstehenden Ansprüche, wobei der Korridor (COR) mindestens eine Seite umfasst, die durch eine Reihe von Objektzielpositionen (OTP) definiert ist.

10. Verfahren zum Steuern eines fahrerlosen Transportfahrzeugs (FTF) nach einem der vorstehenden Ansprüche, wobei mindestens ein Teil des ersten Teils des Wegs (FPA) auf der Hälfte des Korridors (COR) liegt, die der Objektzielposition (OTP), wo das fahrerlose Transportfahrzeug (FTF) ein Objekt (OB) aufnehmen oder absetzen soll, am nächsten ist.

11. Verfahren zum Steuern eines fahrerlosen Transportfahrzeugs (FTF) nach einem der vorstehenden Ansprüche, wobei der erste vorbestimmte Navigationsschritt eine 90-Grad-Drehung umfasst.

12. Verfahren zum Steuern eines fahrerlosen Transportfahrzeugs (FTF) nach Anspruch 11, wobei die 90-Grad-Drehung durch einen Fehlausrichtungswinkel kompensiert wird, der von der Steuerung (CO) berechnet wird.

13. Fahrerloses Transportfahrzeug (FTF), umfassend zwei Zinken (TI), die jeweils ein Zinkenrad (TW) umfassen, ein Antriebsrad (DW), das unter dem fahrerlosen Transportfahrzeug (FTF) in der Mitte von zwei Lenkrollen (CW) positioniert ist, die an gegenüberliegenden Seiten des fahrerlosen Transportfahrzeugs (FTF) positioniert sind, einen primären Sensor (PS), einen vorderen Sensor (FS) und eine Steuerung (CO),
wobei das fahrerlose Transportfahrzeug (FTF) **dadurch gekennzeichnet ist, dass** die Steuerung (CO) mit einem Datenspeicher verbunden ist, der Steuersoftware umfasst, auf deren Grundlage die Steuerung (CO) konfiguriert ist, um das fahrerlose Transportfahrzeug (FTF) auf einem Weg zwischen einer Startposition (SP) und einer Objekthandhabungsposition (OHP) über eine Ausrichtungsposition (AP) und eine Andockstartposition (DSP) zu steuern,
wobei der Datenspeicher des Weiteren Positionsinformationen eines Drehzentrums (TC), das zwischen den Zinkenrädern (TW) positioniert ist, Längeninformationen einer diagonalen Größe (ADS) des fahrerlosen Transportfahrzeugs (FTF) und Objektabmessungsinformationen umfasst,
wobei die Steuerung (CO) konfiguriert ist, um autonom eine Ausrichtungsposition (AP) als die Schnittstelle einer Objektzielpositionsmittellinie (OTPCL) und eines ersten Teils des Wegs (FPA), entlang dessen das fahrerlose Transportfahrzeug zum Bewegen konfiguriert ist, zu bestimmen, wobei der erste Teil des Wegs (FPA) Teil eines vorgegebenen Korridors (COR) ist,
wobei die Steuerung (CO) konfiguriert ist, um das fahrerlose Transportfahrzeug (FTF) zu steuern, um die Bewegung zu stoppen, wenn das Drehzentrum (TC) mit der Ausrichtungsposition (AP) zusammenfällt, und
wobei die Steuerung konfiguriert ist, um das fahrerlose Transportfahrzeug (FTF) entlang eines zweiten Teils des Wegs (SPA) von der Ausrichtungsposition zu der Andockstartposition (DSP) basierend auf einem ersten vorbestimmten Navigationsschritt zu navigieren, der das Drehen des fahrerlosen Transportfahrzeugs (FTF) um das Drehzentrum (TC) umfasst, sodass die zwei Zinken (TI) zu der Objekthandhabungsposition (OHP) zeigen,
wobei die Steuerung ferner konfiguriert ist, um das fahrerlose Transportfahrzeug (FTF) gemäß einem weiteren vorbestimmten Navigationsschritt mindestens teilweise basierend auf einer Eingabe von dem primären Sensor (PS) über eine durch die Objektabmessungsinformationen bestimmte Entfernung entlang eines dritten Teils des Wegs (TPA) von der Andockstartposition (DSP) zu der Objekthandhabungsposition (OHP) zu navigieren.

14. Fahrerloses Transportfahrzeug nach Anspruch 13, wobei die Steuerung (CO) des Weiteren konfiguriert ist, um die Objektzielpositionsmittellinie (OTPCL) autonom basierend auf in dem Datenspeicher gespeicherten Informationen und von dem vorderen Sensor (FS) und/oder dem primären Sensor (PS) bereitgestellten Informationen zu bestimmen.

15. Fahrerloses Transportfahrzeug nach einem der Ansprüche 13 und 14, wobei der erste vorbestimmte Navigationsschritt eine 90-Grad-Drehung umfasst, und wobei die Steuerung konfiguriert ist, um einen Fehlausrichtungswinkel zu bestimmen, und des Weiteren konfiguriert ist, um die 90-Grad-Drehung durch den Fehlausrichtungswinkel zu kompensieren.

## Revendications

1. Procédé de commande d'un véhicule à guidage automatique (AGV) sur une trajectoire entre une position de départ (SP) et une position de manutention d'objet (OHP) à travers une position d'alignement (AP) et une position de départ d'amarrage (DSP), ledit véhicule à guidage automatique (AGV) comprenant un centre de virage (TC), au moins un fourchon (TI), au moins une roue motrice (DW), au moins deux roulettes pivotantes (CW), un dispositif de commande (CO), un capteur primaire (PS) et un capteur secondaire (SS),
dans lequel ladite commande comporte la navigation dudit véhicule à guidage automatique (AGV) dans un couloir (COR) prédéfini le long d'une première partie de ladite trajectoire (FPA), vers ladite position d'alignement (AP),
dans lequel ladite commande est **caractérisée en ce qu'**elle comporte la navigation dudit véhicule à guidage automatique (AGV), le long d'une deuxième partie de ladite trajectoire (SPA), vers ladite position de départ d'amarrage (DSP), sur la base d'une première étape de navigation prédéterminée comprenant le virage dudit véhicule à guidage automatique (AGV) autour dudit centre de virage (TC) de sorte que ledit au moins un fourchon (TI) pointe vers ladite position de manutention d'objet (OHP),
dans lequel ladite deuxième partie de ladite trajectoire (SPA) commence au niveau de ladite position d'alignement (AP), et dans lequel ladite position d'alignement (AP) est déterminée de manière autonome par ledit véhicule à guidage automatique (AGV) lorsque ledit centre de virage est aligné avec une ligne centrale de position cible d'objet (OTPCL),
dans lequel ladite commande comporte la navigation dudit véhicule à guidage automatique (AGV) selon une autre étape de navigation prédéterminée au moins en partie sur la base d'une entrée à partir dudit capteur primaire (PS) le long d'une troisième partie de ladite trajectoire (TPA), à partir de ladite position de départ d'amarrage (DSP) vers ladite position de manutention d'objet (OHP) sur une distance déterminée par lesdites informations de dimension d'objet, et
dans lequel ladite commande comporte l'arrêt d'un déplacement dudit véhicule à guidage automatisé (AGV) lorsque ledit véhicule à guidage automatique (AGV) est aligné avec ladite position de manutention d'objet (OHP).

2. Procédé de commande d'un véhicule à guidage automatique (AGV) selon la revendication 1, dans lequel ladite position d'alignement (AP) est déterminée par ledit dispositif de commande (CO) sur la base d'informations prédéterminées d'un centre de virage (TC) dudit véhicule à guidage automatique (AGV), d'informations de dimension d'objet prédéterminées et d'informations de position cible d'objet prédéterminées.

3. Procédé de commande d'un véhicule à guidage automatique (AGV) selon la revendication 1 ou 2, dans lequel ladite position d'alignement (AP) est en outre déterminée par ledit dispositif de commande (CO) sur la base d'une comparaison d'informations de dimension d'objet adjacent prédéterminées d'un objet situé au niveau d'une position cible d'objet adjacent (AOTP) et d'entrées à partir dudit capteur primaire (PS) balayant des environs dudit véhicule à guidage automatique (AGV).

4. Procédé de commande d'un véhicule à guidage automatique (AGV) selon l'une quelconque des revendications précédentes, dans lequel ladite position d'alignement (AP) est déterminée en tant que position sur ladite première partie de ladite trajectoire (FPA), de préférence devant ledit centre de virage (TC) dudit véhicule à guidage automatique (AGV).

5. Procédé de commande d'un véhicule à guidage automatique (AGV) selon l'une quelconque des revendications précédentes, dans lequel ledit dispositif de commande (CO) détermine une intersection perpendiculaire de ladite ligne centrale de position cible d'objet (OTPCL) et de ladite première partie de ladite trajectoire (FPA) sur la base d'informations reçues à partir dudit capteur primaire (PS).

6. Procédé de commande d'un véhicule à guidage automatique (AGV) selon l'une quelconque des revendications précédentes, dans lequel ledit dispositif de commande (CO) détermine un ajustement d'angle (AN) requis pour que ladite première partie de ladite trajectoire (FPA) soit parallèle à l'avant dudit objet.

7. Procédé de commande d'un véhicule à guidage automatique (AGV) selon l'une quelconque des revendications précédentes, dans lequel ledit dispositif de commande (CO) au cours de ladite étape de navigation prédéterminée et/ou de ladite autre étape de navigation prédéterminée commande un déplacement dudit véhicule à guidage automatique indépendamment d'une entrée à partir dudit capteur primaire (PS) et dudit capteur secondaire (SS).

8. Procédé de commande d'un véhicule à guidage automatique (AGV) selon l'une quelconque des revendications précédentes, dans lequel la largeur minimale dudit couloir (COR) prédéfini est déterminée par une taille diagonale (ADS) de véhicule à guidage automatique.

9. Procédé de commande d'un véhicule à guidage automatique (AGV) selon l'une quelconque des revendications précédentes, dans lequel ledit couloir (COR) comprend au moins un côté défini par une rangée de positions cibles d'objet (OTP).

10. Procédé de commande d'un véhicule à guidage automatique (AGV) selon l'une quelconque des revendications précédentes, dans lequel au moins une partie de ladite première partie de ladite trajectoire (FPA) est situé sur la moitié dudit couloir (COR) la plus proche de la position cible d'objet (OTP) où ledit véhicule à guidage automatique (AGV) doit prendre ou déposer un objet (OB).

11. Procédé de commande d'un véhicule à guidage automatique (AGV) selon l'une quelconque des revendications précédentes, dans lequel ladite première étape de navigation prédéterminée comprend un virage à 90 degrés.

12. Procédé de commande d'un véhicule à guidage automatique (AGV) selon la revendication 11, dans lequel ledit virage à 90 degrés est compensé par un angle de désalignement calculé par ledit dispositif de commande (CO).

13. Véhicule à guidage automatique (AGV) comprenant deux fourchons (TI) comprenant chacune une roue de fourchon (TW), une roue motrice (DW) positionnée sous le véhicule à guidage automatique (AGV) au milieu de deux roulettes pivotantes (CW) positionnées au niveau de côtés opposés du véhicule à guidage automatique (AGV), un capteur primaire (PS), un capteur avant (FS) et un dispositif de commande (CO),
dans lequel ledit véhicule à guidage automatique (AGV) est **caractérisé en ce que** ledit dispositif de commande (CO) est associé à un stockage de données comprenant un logiciel de commande sur la base duquel ledit dispositif de commande (CO) est configuré pour commander le véhicule à guidage automatique (AGV) sur une trajectoire entre une position de départ (SP) et une position de manutention d'objet (OHP) à travers une position d'alignement (AP) et une position de départ d'amarrage (DSP),
dans lequel ledit stockage de données comprend en outre des informations de position d'un centre de virage (TC) positionné entre lesdites roues de fourchon (TW), des informations de longueur d'une taille diagonale (ADS) dudit véhicule à guidage automatique (AGV) et des informations de dimension d'objet,
dans lequel ledit dispositif de commande (CO) est configuré pour déterminer de manière autonome une position d'alignement (AP) en tant qu'intersection d'une ligne centrale de position cible d'objet (OTPCL) et d'une première partie de ladite trajectoire (FPA) le long de laquelle ledit véhicule à guidage automatique est configuré pour se déplacer, dans lequel ladite première partie de ladite trajectoire (FPA) fait partie d'un couloir (COR) prédéfini,
dans lequel ledit dispositif de commande (CO) est configuré pour commander ledit véhicule à guidage automatique (AGV) pour arrêter un déplacement lorsque ledit centre de virage (TC) coïncide avec ladite position d'alignement (AP), et
dans lequel ledit dispositif de commande est configuré pour faire naviguer ledit véhicule à guidage automatique (AGV), le long d'une deuxième partie de ladite trajectoire (SPA), à partir de ladite position d'alignement vers ladite position de départ d'amarrage (DSP), sur la base d'une première étape de navigation prédéterminée comprenant le virage dudit véhicule à guidage automatique (AGV) autour dudit centre de virage (TC) de sorte que lesdites deux fourchons (TI) pointent vers ladite position de manutention d'objet (OHP),
dans lequel ledit dispositif de commande est en outre configuré pour faire naviguer ledit véhicule à guidage automatique (AGV), selon une autre étape de navigation prédéterminée au moins en partie sur la base d'une entrée à partir dudit capteur primaire (PS), sur une distance déterminée par lesdites informations de dimension d'objet le long d'une troisième partie de ladite trajectoire (TPA), à partir de ladite position de départ d'amarrage (DSP) vers ladite position de manutention d'objet (OHP).

14. Véhicule à guidage automatique selon la revendication 13, dans lequel ledit dispositif de commande (CO) est en outre configuré pour déterminer de manière autonome ladite ligne centrale de position cible d'objet (OTPCL) sur la base d'informations stockées dans ledit stockage de données et d'informations fournies par ledit capteur avant (FS) et/ou ledit capteur primaire (PS).

15. Véhicule à guidage automatique selon l'une quelconque des revendications 13 et 14, dans lequel ladite première étape de navigation prédéterminée comprend un virage à 90 degrés, et dans lequel ledit dispositif de commande est configuré pour établir un angle de désalignement et en outre configuré pour compenser ledit virage à 90 degrés par ledit angle de désalignement.
